# EUROPEAN PATENT APPLICATION

(11) **EP 4 770 147 A1**
(43) Date of publication of application: **01.07.2026**
(21) Application number: 25216804.2
(22) Date of filing: 18.11.2025
(51) Int. Cl.: H04W 4/06, H04W 4/90, H04L 67/55, H04W 4/021, H04W 4/60, H04W 12/08

(54) **WIRELESS EMERGENCY ALERT DISTRIBUTION**

(30) Priority: 27.11.2024 US 202418962934
(71) Applicant: Opencode Systems E.O.O.D, 1616 Sofia (BG)
(72) Inventor: STAYKOFF, Constantin, 1616 Sofia (BG)

(57) **Abstract**

A digital telecommunications client-server system for globally collecting, routing and distributing emergency alerts. An application client intercepts a Cell Broadcast emergency alert received by the terminal and forwards a copy of the alert with its parameters and along with other terminal and SIM information to the application server. The application server routes the received copy of the emergency alert to interested users, systems or third parties. The application server stores copies of received such cell broadcast emergency alerts forwarded by application clients, recognizes unique alerts, assigns to each of them a unique alert identifier, stores them in its alert registry and maintains up-to-date alert history and statistics. Without using the application server, a user with an application client can autonomously route intercepted emergency alerts to other interested users, systems or third parties.

## Description

### FIELD OF THE INVENTION

This invention relates to collecting, routing and distributing wireless emergency alerts and building a public registry of such alerts.

### BACKGROUND OF THE INVENTION

Wireless public alert systems (e.g., CMAS) are utilized when an early public warning is needed, including in case of natural disasters, industrial accidents, epidemic, military or public disruptions, or other outbreaks. They are advantageous over other mass broadcast methods (TV and radio media or SMS mobile messaging) because they are directly using mobile phone radio networks and because of their capability to reach millions of citizens within a very short period of time. Such speed of delivery is achieved by using standardized Cell Broadcast technology, which allows the mobile network to broadcast messages to multiple mobile phone users at the same time. Cell Broadcast is a multi-cast and effective technology for any type of emergency because of how quickly it can reach millions and how widespread mobile network infrastructure is.

iCell Broadcast Center (iCBC) is such a public warning gateway, which enables government agencies and mobile network operators to broadcast alert messages to an area's mobile phones attached to 5G, 4G, 3G and 2G networks. Thus, these mobile phones receive the alert messages in seconds, with virtually no delay.

iCell Broadcast Entity (iCBE) is an alert creation and management interface that allows defining alert messages, alert templates and target broadcast areas. It manages user authentication and all needed broadcast authorizations. Target broadcast areas are defined directly on a map by drawing a shape around an area of interest, pinpointing exact locations or specifying from predefined locations such as postal codes, addresses, administrative areas, logically grouped cells or others. As such iCBE submits the created alert and its target areas to iCBC for broadcast via the location's relevant mobile networks. iCBC identifies precisely involved radio network infrastructure (such as radio network controllers and cells) and submits the alert to this infrastructure for broadcast. Government agencies, network operators or other third parties use the iCBE interface to create and issue emergency alerts for broadcast.

However, there are several drawbacks of Cell Broadcast used as a mass alerting technology. For example, individuals outside the broadcast area will not be notified about the issued alert. Whereas, there are a number of occasions, in which someone might be interested in this broadcasted alert, even if not currently located in the target emergency area. One example is a remote individual who would like to know if a flood alert was received in a specific location. Receiving remotely the emergency alerts of an affected area could be beneficial when planning a trip, owning a property there, etc. Authorities are trying to overcome this by using other broadcast channels such as TV and radio announcements, apps, web sites, social network channels, road signage etc., but such approach is adding the complexity of dealing with multiple channels and channel specifics and thus decreasing the disaster management efficiency and the ability of the population to stay focused on the main critical communication channel. Thus, in emergency situations agencies mostly use only Cell Broadcast for public warning and keep it as only channel to communicate in the endangered location.

Consequently, Cell Broadcast public warning alerts are sent to the population in or near the emergency location. However, an individual outside the designated location has no means to ascertain which alerts have been received by a specific person or group of persons, for example by friends and family, in the emergency location.

Another technology drawback is that Cell Broadcast technology does not provide mobile phones with any means to acknowledge the alert reception. Thus, it is difficult to identify precisely how many or which individuals and mobile devices are in the target area or have received the alert. It is equally difficult to measure the exact time it takes for an alert to reach its intended recipients or what was the precise time of alert reception. Without such feedback, the disaster response of the authorities and first responders is less efficient and as such less effective in the fight against casualties and fatalities.

Another drawback is that various geographic locations may independently deploy its own Cell Broadcast public warning system. Thus, a citizen of one geographic location is not informed about the alerts issued in another geographic location.. Also, there is not a global means for a user to be being notified of alerts issued by a specific government or other broadcaster in remote geographic location. Finally, a global or wide scale registry and history of alerts issued does not exist.

Therefore, there is a need of a system collecting, routing and distributing wireless emergency alerts, thus providing individuals and groups of users with the ability to follow emergency alerts received by other individuals or directed to other locations. There is also need of publishing collected emergency alert messages to an accessible public space that is available globally, while also acting as a global registry and history of issued public warning alerts.

### SUMMARY OF THE INVENTION

A digital telecommunications client-server system for collecting, routing and distributing Cell Broadcast emergency alerts, comprising an application client that may be installed on a mobile telecommunications terminal of an end user, and an application server. The application client detects terminal Cell Broadcast emergency alerts, and immediately forwards a copy of the alert, with all available alert, terminal, location, network and SIM information, to the application server. The application server forwards the received emergency alert to other users, systems and parties of interest, if any. The application server also identifies the alert as not duplicative to other alerts, even if it is reported by multiple terminals, and saves the alert in its alert registry. The application server can distribute registered alerts to other users of interest, systems and parties.

### BRIEF DRAWING DESCRIPTION

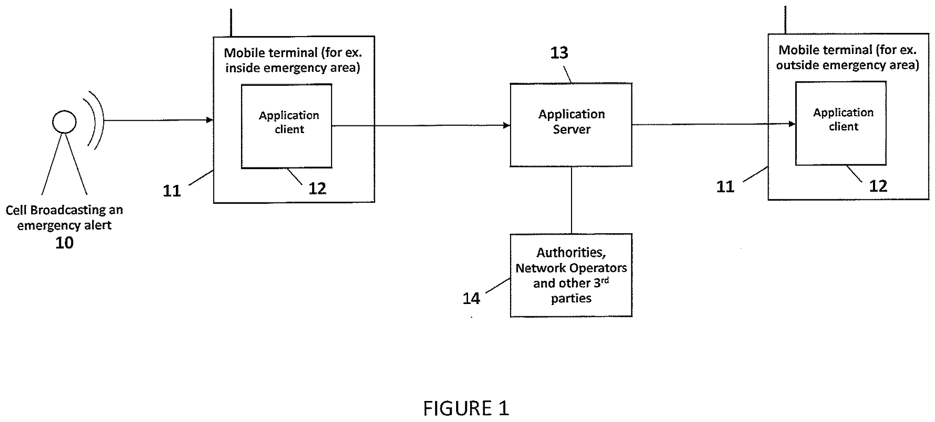

**Figure** 1 presents a preferred system architecture embodiment of the client-server system where the application server is communicating with application clients collecting and routing emergency alerts from and to intended recipients. Application clients are installed on mobile telecommunication terminals which are located in and out of emergency area. The application server is also integrated with authorities, mobile network operators and other third parties, interested in notifying the application server for issued by them alerts or being notified by the application server for collected emergency alerts issued by other parties.

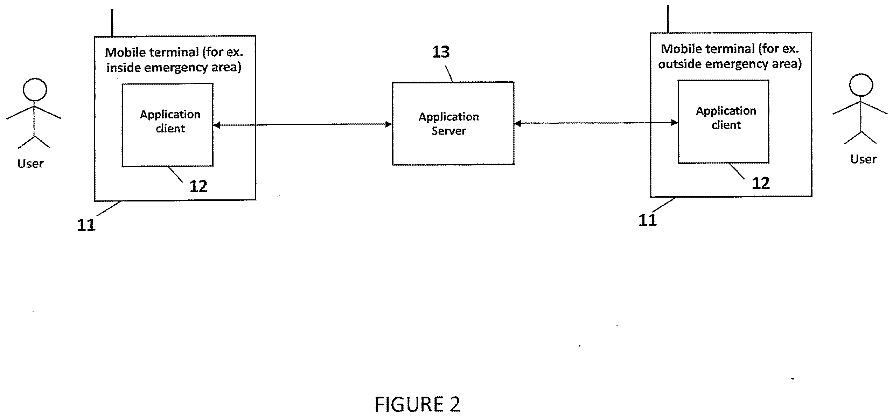

**Figure** 2 presents another preferred system architecture embodiment of the client-server system where one user, for example inside an emergency area, can authorize another user, for example outside an emergency area, to receive his or her emergency alerts. For example, following such authorization, an authorized user located outside the emergency area receives a copy of the alert(s) received by the other user located within the emergency area.

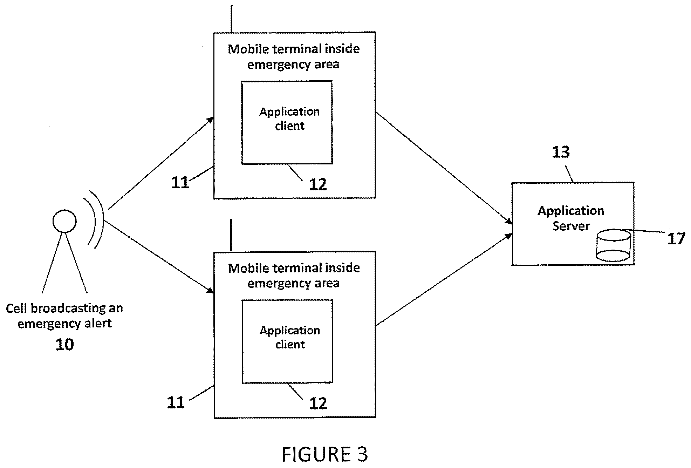

**Figure** 3 presents another preferred system architecture embodiment of the client-server system where terminals with application clients inside an emergency broadcast area forward all received alerts to the application server, which manages to uniquely identify each alert, even if received from different application clients, and dynamically stores it in its alert registry.

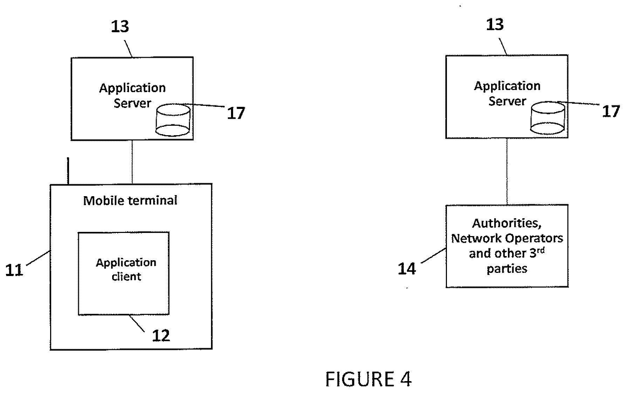

**Figure** 4 presents another preferred system architecture embodiment of the client-server system where the alert registry built by the application server is exposed as a global public alert registry to any application client or any interested third party.

### DESCRIPTION OF PREFERRED EMBODIMENTS

In the present invention, the term "mobile telecommunications terminal" is understood to mean any portable electronic device or user equipment capable of transmitting and receiving at least one type of radio emitted messages such as cell broadcast public emergency alerts.

In the present invention, the term "application client" is understood to mean a mobile application installed on a mobile telecommunications terminal, which communicates with the application server using a network protocol like HTTP, HTTPS, or TCP/IP.

Unless defined otherwise, all technical and scientific terms used herein have the same meaning as commonly understood by one of ordinary skill in the art to which this technology belongs.

The present invention addresses weakness of the prior art via a client-server system for collecting, routing and distributing cell broadcast emergency alerts, where the application server can also act as an alert registry of collected public warning alerts.

Referring to **Figure 1****,** when an emergency alert is broadcasted to a given area (by a government agency, a mobile network operators, a third party, or automatically by a natural disaster sensor), at least one cell **(10)** in the target area will broadcast the emergency alert and the alert will be received by at least one mobile telecommunications terminals **(11)** covered by the cell (10).

In a general embodiment, the application client **(12),** located in the mobile telecommunications terminal **(11),** intercepts the received by the terminal **(11)** cell broadcast emergency alert. After intercepting the alert, the application client **(12)** notifies the application server **(13)** and forwards a copy of the alert to the application server **(13).**

In a general embodiment, the application server **(13),** after receiving a copy of an alert, from an application client **(12),** notifies other application clients **(12)** and third parties **(14)** in interest of the alert.

Referring to **Figure 2****,** a user having a mobile telecommunications terminal **(15)** with application client **(12),** for example inside an emergency area, can share his or her emergency alerts with at least one other user, for example outside an emergency area. For that, a preliminary authorization can be executed via the application server **(13).** After such authorization, the authorized user with terminal **(11)** and for example, outside the emergency area, will receive from the application server **(13)** collected alerts from the user who is sharing his or her alerts, for example, inside the emergency area. The terminal of the authorized user is not mandatory to have an application client **(12)** as the application server **(13)** can forward collected alerts over conventional channels such as email, text, call, etc. The "user" in **Figure 2** may be a device, and does not require a human.

Referring to **Figure 3****,** the application server **(13)** receives and stores copy of a cell broadcast emergency alert from an application client **(12)** and registers the alert in its alert registry **(17)** assigning to it a unique identifier. Since multiple terminals **(15)** (not limited to two) can be attached to one or multiple broadcasting cells **(10),** the application server **(13)** may receive copies of the same alert from multiple terminals **(15)** with application clients **(12).** To avoid storing multiple copies of the same alert in its alert registry, the application server **(13)** will detect and disregard duplicative alerts by comparing alert properties such as alert type, alert serial number, cell id of the broadcasting cell, broadcasting mobile network operator and network generation (for example 4G or 5G), alert text etc. An alert will be stored in the application server registry **(17)** only if no other alert has already been stored with the same information or properties.

In a preferred embodiment, while forwarding a copy of the alert to the application server **(13),** the application client **(12)** will also provide additional information such as terminal and SIM information, IMEI (International Mobile Equipment Identity) information, precise device location, the IMSI (International Mobile Subscriber Identity), etc. Together with the alert, the additional information is also stored in the registry **(17)** and available to application clients **(12)** and third parties **(14).**

In another embodiment, the application client **(12)** has the functionality to access the emergency alert history log of the mobile telecommunications terminal **(11)** and upload to the application server **(13)** emergency alerts previously received by the mobile terminal **(11).** Thus, the alert server **(13)** will be able to collect and register in its registry **(17)** alerts received by a terminal **(11)** prior to installation of an application client **(12).**

Referring to **Figure 4****,** in another preferred embodiment, the application server **(13)** communicates with authorities, mobile network operators and other third parties **(14)** using machine-to-machine, man-to-machine or another interface. The third parties **(14)** register issued by them emergency alerts in the application server or are notified by the application server **(13)** for available in its registry **(17)** alerts of their interest. Thus, the third parties **(14)** can submit and retrieve emergency alerts to and from the alert registry **(17)** of the application server **(13).** The submission and retrieval of emergency alerts described in **Figure 4** allows the application server **(13)** and the third parties **(14)** to build own automated alert processing. Thus, for example, a fire alert submitted to the registry **(17)** from an authority **(14)** or application clients **(12)** of one targeted geographic location can be retrieved by an authority **(14)** or application clients **(12)** of another targeted geographic location and trigger automatic and manual preventive measures such as sending additional fire fighters or equipment.

The application server **(13)** is independent from broadcasting alert servers of mobile network operators **(14),** but it may also be built as functional emergency broadcast module of mobile network operators, authorities and third parties **(14).**

In a general embodiment, the application client **(12)** of a mobile telecommunications terminal **(11)** out of the coverage of an emergency alert broadcasting cell (10), can receive a copy of the emergency alert from the application server **(13),** as long as a copy of the emergency alert is forwarded to the application server **(13)** by at least one application client **(12)** installed on a mobile telecommunication terminal **(11)** in coverage of a broadcasting cell **(10).**

In a preferred embodiment, the application client **(12)** or a third party **(14)** can receive emergency cell broadcast alert notifications using a subscription service offered by the application server **(13)** and its alert registry **(17).** An end user of the application client **(12)** or a third party **(14)** can select and subscribe to at least one geographic area, such as a region or country, or at least one mobile network operator, or to any other available alert criteria. When an emergency alert received by the application server **(13)** and its registry **(17)** meets the selecting criteria, the application server **(13) will** forward the emergency alert to the subscribed application client **(12)** or the third party **(14).**

In one embodiment, the application server **(13)** provides application clients **(12)** with zones, for example, high-risk flood zones or zones with potential dam failures or earthquake zones or tsunami zones or zones with outage of electric power, and users have the ability to subscribe and receive alerts issued for these zones.

In a preferred embodiment, the application client **(12)** when forwarding a copy of received emergency alert, communicates to the application server **(13)** the exact time the emergency alert was received by providing the terminal **(11)** time and the deviation of the terminal clock from the astronomic time at the moment of the alert reception. This allows broadcast authorities, mobile network operators and other entities **(14)** to accurately measure delivery time and speed of delivery to the population for each issued emergency, thanks to data collected by the application server **(13)** from application clients **(12).** For example, for a given emergency alert it will be possible to measure the time it reached 4G users with Android phones covered by given mobile network cells.

In a preferred embodiment, the application client **(12)** of a mobile telecommunications terminal **(11)** located inside an emergency broadcasting area covered by cells **(10),** after receiving the emergency alert, proactively reports to the application server **(13),** for example on a given period, the location of mobile terminal **(11).** Collecting such location data for mobile terminals **(11)** in the emergency broadcasting area covered by cells **(10)** will allow monitoring, for example on a map, of individual and crowd movement, evacuation trends etc.

Users may register or subscribe to receive out of area emergency alert notifications. The registration or subscription may be obtained by an application available on the user's mobile phone, computer or other wireless device with connectivity, such as via the internet. The application server selects the particular emergency alerts from out of area locations to which the user has subscribed and distributes the emergency alerts to the identified subscribers. The emergency alerts may also be subscribed to base upon, subject (such as kidnapping, particular weather events or other subjects), persons involved, or date, in addition to location.

A user of the terminal and application client receives notifications from the application server of received Cell Broadcast alerts from at least one other user or at least one geographic area or at least one country or at least one mobile network or at least from one other alert selecting criteria. The application client and the application server use push and pull communication methods to notify each other for newly available emergency alerts.

A user of the equipment without an application client can receive notifications from the application server by other channels (for example a call, or email, or text message, or social network message, etc.).

The application server provides application clients with zones, for example, high-risk flood zones or zones with potential dam failures or earthquake zones or zones with outage of electric power, and users have the ability to receive alerts issued for these zones. Users may also create their own zones of interest and follow alerts received in these zones. Users may also be notified for alerts specifically received by at least one other user with an application client.

The application client communicates to the application server the exact time the emergency alert was received by providing the terminal time and the deviation of the terminal clock at the moment of the alert reception. Therefore, broadcast entities, mobile network operators and authorities can measure accurately, for each reported by the application client emergency alert, the delivery time and by that alert delivery speed for the target population. They can also account the devices reached by the alert and identity precisely users in the disaster area.

The application client of a mobile telecommunications terminal located in an emergency alert target area, after intercepting the emergency alert, proactively reports to the application server the mobile terminal location, on demand or on a given period, allowing individual or crowd movement monitoring. Such movement data can be used, for example, to visualize evacuation trend, take disaster management decisions etc.

Finally, the application server analyses collected alert data received from application clients, such as, for example, alert serial number, message identifier, cell identifier, etc., and other data such as device information, mobile network, location etc. Based on such collected data, the application server recognizes alerts that are not duplicative, assigns to each of them a unique global alert identifier, registers them in its global alert registry and maintains up-to-date global alert history and statistics.

Authorities, mobile network operators or other third parties can also provide emergency alerts from the application server or vice versa. For that purpose, the application server uses machine-to-machine, man-to-machine or another interface.

The foregoing embodiments of the technology are examples and can be varied in many ways. Such present or future variations are not to be regarded as a departure from the scope of the technology, and all such modifications are intended to be included within the scope of the claims.

## Claims

1. A digital telecommunications client-server system for collecting, routing and distributing cell broadcast emergency alerts, comprising:
an application client that is located in a mobile telecommunication terminal of an end user,
wherein the application client intercepts the reception of a cell broadcast emergency alert by the terminal and immediately forwards a copy of the alert with all its system parameters to an application server;
an application server, wherein the application server collects and stores copies of cell broadcast emergency alerts reported by application clients installed on mobile telecommunications terminals and where the application server recognizes alerts as not duplicative to other alerts, assigns to each alert a unique alert identifier, registers each alert in an alert registry and maintains up-to-date alert history and statistics, and wherein the application server receiving an emergency alert from at least one application client or third party can forward it to at least one other application client, user, system or third party.

2. The system according to claim 1, wherein the application client provides the application server with additional alert information, comprising: terminal and SIM information, IMEI (International Mobile Equipment Identity) information, precise device location, the IMSI (International Mobile Subscriber Identity), etc.

3. The system according to claim 1, wherein a user of a terminal with application client can share his or her alerts to at least one other user. Such sharing may require mutual authorization from the users.

4. The system according to claim 1, wherein the application client has functionality to access the alert history log of the mobile telecommunications terminal and forward to the application server copy of emergency alerts previously received by the mobile terminal.

5. The system according to claim 1, wherein authorities, mobile network operators or other third parties can submit to the application server issued by them or other parties emergency alerts using machine-to-machine, man-to-machine or another interface.

6. The system according to claim 1, wherein authorities, mobile network operators or other third parties can retrieve emergency alert notifications registered in the application server using machine-to-machine, man-to-machine or another interface.

7. The system according to claim 1, wherein an application client has access to emergency alerts registered by the application server by other application clients installed on mobile telecommunication terminals or third parties.

8. The system according to claim 1, wherein the application server can be combined with the application client or combined with an alert broadcasting server of a mobile network operator or another party.

9. The system according to claim 1, wherein the application client or a third party can receive emergency cell broadcast alerts using a subscription service offered by the application server and comprising subscription option to receive the alerts of at least one user or at least one geographic area or at least one mobile network operator or at least one country or at least one other selected alert criteria.

10. The system according to claim 9, wherein the application server provides application clients with zones, for example, high-risk flood zones or zones with potential dam failures or earthquake zones or zones with outage of electric power, and users have the ability to select and receive alerts issued for these zones.

11. The system according to claim 2, wherein the application client communicates to the application server the exact time the emergency alert was received by providing the terminal time and the deviation of the terminal clock at the moment of the alert reception.

12. The system according to claim 11, wherein broadcast entities, mobile network operators or authorities can measure accurately for each issued emergency alert delivery time and count of reached population, thanks to data collected by the application server.

13. The system according to claim 1, wherein the application client of a mobile telecommunications terminal located in an emergency alert target area, after receiving the emergency alert, can start to proactively report the mobile terminal location for a given period, allowing monitoring of individual and crowd movement such as evacuation trend, etc.
